# FASCICULE DE BREVET EUROPEEN

(11) **EP 4 029 730 B1**
(45) Date de publication et mention de la délivrance du brevet: **02.07.2025**
(21) Numéro de dépôt: 22151393.0
(22) Date de dépôt: 13.01.2022
(51) Int. Cl.: B60N 2/897, B60N 2/68, B60N 2/60

(54) **DOSSIER DE SIÈGE DE VÉHICULE**
RÜCKENLEHNE EINES FAHRZEUGSITZES
VEHICLE SEAT BACKREST

(30) Priorité: 19.01.2021 FR 2100488
(43) Date de publication de la demande: 20.07.2022
(73) Titulaire: FAURECIA Sièges d'Automobile, 92000 Nanterre (FR)
(72) Inventeur: OFNER, Roger, 75013 PARIS (FR)
(74) Mandataire: Plasseraud IP

(56) Documents cités:
- DE-A1- 102016 107 090
- JP-A- 2010 148 601
- US-A1- 2018 319 301

## Description

### Domaine technique

La présente description est relative à un dossier de siège de véhicule, notamment de véhicule automobile. Il est également décrit un siège de véhicule comprenant un tel dossier, et un procédé de fabrication d'un tel dossier de siège de véhicule.

### Technique antérieure

Dans le domaine automobile, en particulier, il est connu de réaliser un dossier de siège de véhicule en fixant une garniture sur une armature de dossier. L'armature de dossier assure la rigidité du dossier, tandis que la garniture assure le confort et l'esthétisme du dossier.

Classiquement, la garniture comprend une matelassure recouverte d'une ou plusieurs housses permettant de protéger la matelassure et/ou de la maintenir en position sur le dossier du siège.

Un tel dossier est cependant difficile à réaliser à l'aide d'automates. La mise en place précise de la matelassure peut notamment être difficile.

Il a été proposé de réaliser la partie arrière de la garniture au moyen d'une coque, dépourvue de matelassure. Une matelassure sur la partie arrière du dossier apparait en effet inutile puisque cette partie arrière n'a pas de fonction de support de l'occupant du siège.

Cependant, une telle coque est également difficile à manipuler, à mettre en place précisément et à fixer sur l'armature de dossier, aux moyens d'automates. US 2018/319301 montre un dossier de siège de véhicule comprenant une armature de dossier, au moins une tige de fixation d'appui-tête, et une garniture de dossier, la garniture de dossier comprenant au moins une coque centrale arrière, fixée sur une face arrière de l'armature de dossier.

### Résumé

La présente divulgation vise à améliorer la situation.

À cette fin, il est décrit un dossier de siège de véhicule comprenant une armature de dossier, au moins une tige de fixation d'appui-tête, et une garniture de dossier, la garniture de dossier comprenant au moins une coque centrale arrière, fixée sur une face arrière de l'armature de dossier, la coque centrale arrière comprenant au moins un trou traversé par la au moins une tige de fixation d'appui-tête.

Ainsi, avantageusement, le trou sur la coque centrale arrière permet de guider la mise en position de cette coque centrale arrière sur l'armature de dossier. Il est ainsi possible d'obtenir une mise en place très précise de la coque centrale arrière, même à l'aide d'automates.

Selon des modes de réalisations préférés, le procédé d'assemblage comprend une ou plusieurs des caractéristiques suivantes, prises seules ou en combinaison :
- le au moins un trou est formé sur un rebord supérieur de la coque centrale arrière ;
- la coque centrale arrière comprend un trou, de préférence deux trous, chaque trou étant traversé par une unique tige de fixation d'appui-tête respective ;
- la garniture de dossier comprend au moins deux coques latérales arrière, les coques latérales arrière étant de préférence fixées sur la coque centrale arrière, notamment par emboîtage élastique ;
- la garniture de dossier comprend également un module central avant de garniture, comprenant au moins une matelassure de dossier, le module central avant de garniture étant fixé sur une face avant de l'armature de dossier ;
- le module central avant de garniture comprend au moins un trou traversé par la au moins une tige de fixation d'appui-tête, le module central avant de garniture recouvrant de préférence partiellement la coque centrale arrière au voisinage de la au moins une tige de fixation d'appui-tête ;
- l'armature de dossier comprend au moins une traverse haute, solidaire de la au moins une tige de fixation d'appui-tête, et une traverse basse, le module central avant de garniture comprenant des moyens de fixation à la traverse haute et/ou à la traverse basse, notamment des moyens de fixation par emboîtage élastique ;
- le module central avant de garniture comprend un support de la matelassure, la matelassure étant par exemple surmoulée sur le support ;
- la garniture de dossier comprend au moins deux modules latéraux avant de garniture, les au moins deux modules latéraux avant de garniture comprenant chacun un support fixé sur l'armature de dossier et une matelassure fixée sur le support respectif, la coque centrale arrière étant de préférence fixée sur les supports des modules latéraux avant de garniture, notamment par emboîtage élastique ; et
- les coques latérales arrière sont en outre fixées sur les supports des modules latéraux avant de garniture, notamment par emboîtage élastique.

Selon un autre aspect, il est également décrit un ensemble de dossier de siège de véhicule comprenant un dossier tel que décrit ci-avant, dans toutes ses combinaisons et un appui-tête, l'appui-tête comprenant une armature d'appui-tête et une garniture d'appui-tête, l'armature d'appui-tête étant fixée à la au moins une tige de fixation d'appui-tête.

Il est également décrit un siège de véhicule automobile comprenant une assise avec une armature d'assise et un dossier tel que décrit ci-avant, dans toutes ses combinaisons, en particulier dans un ensemble de dossier de siège tel que décrit ci-avant, dans toutes ses combinaisons, l'armature de dossier étant fixée à l'armature d'assise, de préférence de manière à pouvoir pivoter autour d'un axe transversal.

Il est encore décrit un procédé de fabrication d'un dossier de siège tel que décrit ci-avant dans toutes ses combinaisons, comprenant les étapes consistant à :
i) fournir une armature de dossier sur laquelle est fixée au moins une tige de fixation d'appui-tête ;
ii) fournir une coque centrale arrière comprenant au moins un trou adapté à recevoir la au moins une tige de fixation d'appui-tête ;
iii) mettre en place la coque centrale arrière sur l'armature de dossier de telle sorte que la au moins une tige de fixation d'appui-tête soit reçue dans le au moins un trou ; et
iv) fixer la coque centrale arrière, notamment par emboîtage élastique.

Le procédé de fabrication d'un dossier de siège peut comprendre en outre une étape a) consistant à fournir deux modules latéraux de garniture et à fixer les modules latéraux de garniture sur l'armature de dossier, l'étape a) étant de préférence avant l'étape iii), la coque centrale arrière étant, de préférence encore, fixée sur les modules latéraux de garniture.

Alternativement ou au surplus, le procédé de fabrication d'un dossier de siège peut comprendre une étape b) consistant à fournir deux coques latérales arrière et à fixer les coques latérales arrière, l'étape b) étant de préférence postérieure à l'étape iv) et à l'étape a), le cas échéant, les coques latérales arrière étant de préférence encore fixées sur les modules latéraux de garniture, le cas échéant.

Alternativement ou au surplus, le procédé de fabrication d'un dossier de siège de véhicule peut comprendre une étape c) consistant à fournir un module central avant de garniture et à fixer le module central avant de garniture sur l'armature de dossier, de préférence par emboîtage élastique, l'étape c) étant de préférence encore postérieure aux étapes iv), a) et/ou b), le cas échéant.

### Brève description des dessins

D'autres caractéristiques et avantages apparaîtront au cours de la description suivante d'une de ses formes de réalisation, donnée à titre d'exemple non limitatif, en regard des dessins joints. Sur les dessins :
La figure représente schématiquement en coupe, un exemple de siège de véhicule ;
La figure 2 est un ordinogramme d'un exemple de procédé de fabrication du dossier du siège de véhicule de la figure 1 ;
La figure 3a illustre schématiquement une première étape du procédé de la figure 2 ;
La figure 3b illustre schématiquement un détail de la figure 3a ;

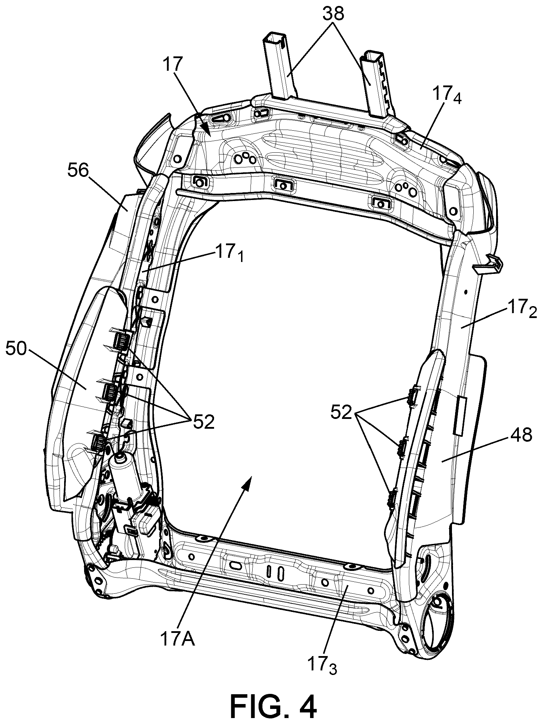

La figure 4 représente schématiquement en perspective une vue de la face avant de l'ébauche de dossier de siège à la fin de l'étape de la figure 3a ;

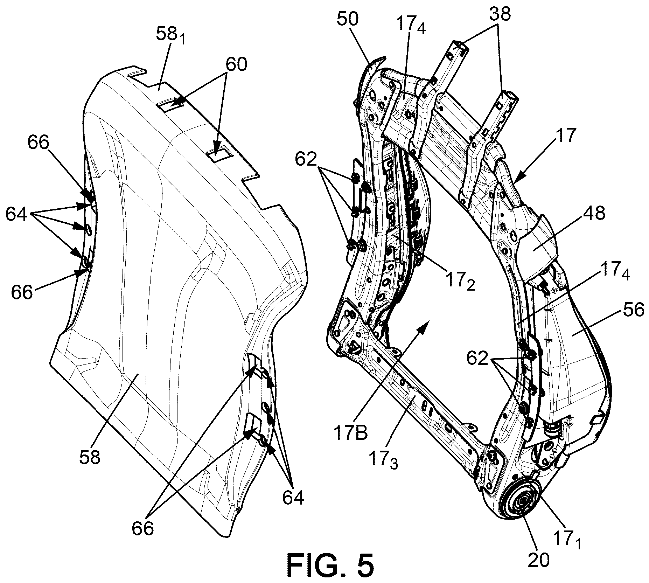

La figure 5 illustre schématiquement une deuxième étape du procédé de la figure 2 ;

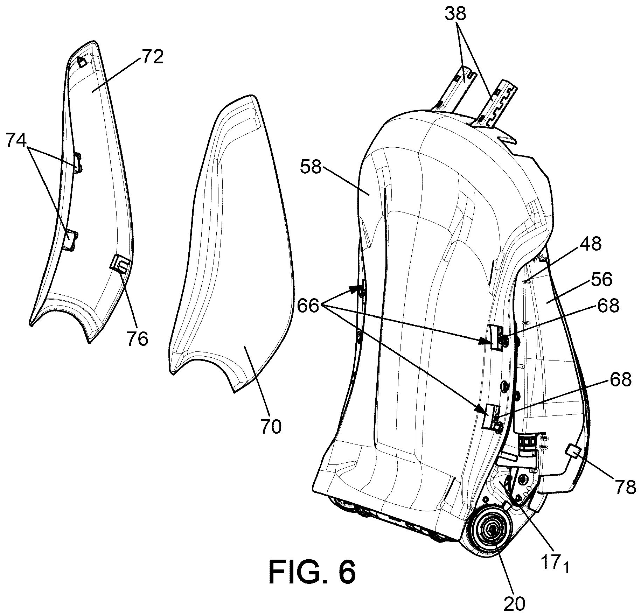

La figure 6 illustre schématiquement une troisième étape du procédé de la figure 2 ;
La figure 7 illustre schématiquement une quatrième étape du procédé de la figure 2 ;

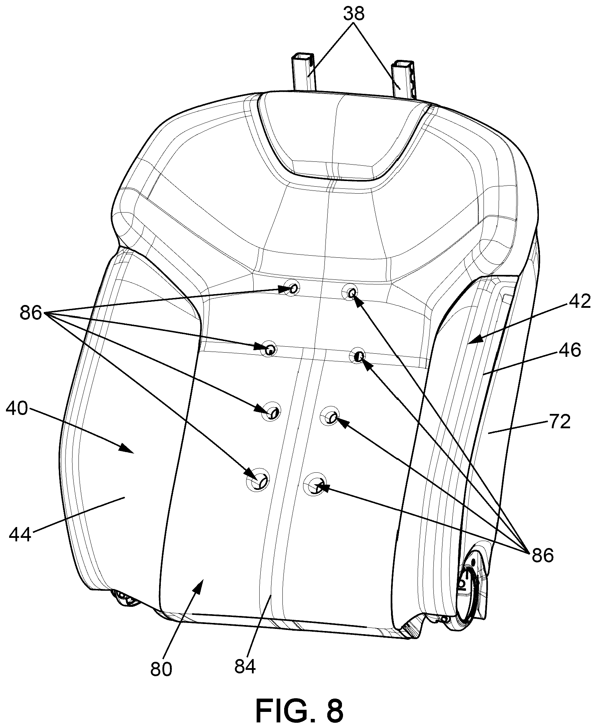

La figure 8 représente en perspective une face avant du dossier de siège obtenu à la fin de l'étape illustrée par la figure 7 ; et
La figure 9 représente en perspective une face arrière du dossier de siège obtenu à la fin de l'étape illustrée à la figure 7.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un siège de véhicule dans sa position normale d'utilisation.

En particulier, la direction longitudinale **X** s'entend de la direction longitudinale du siège. La direction longitudinale du siège est considérée être la même que la direction longitudinale du véhicule automobile dans lequel le siège est monté. Cette direction longitudinale **X** correspond à la direction normale d'avancement du véhicule. La direction longitudinale **X** est horizontale. La direction transversale **Y** du siège correspond ainsi à la direction transversale ou latérale du véhicule automobile. Cette direction transversale correspond à une direction perpendiculaire à la direction normale d'avancement du véhicule. La direction transversale **Y** est horizontale. Enfin, la direction verticale **Z** est une direction verticale du siège, perpendiculaire aux directions longitudinale et transversale.

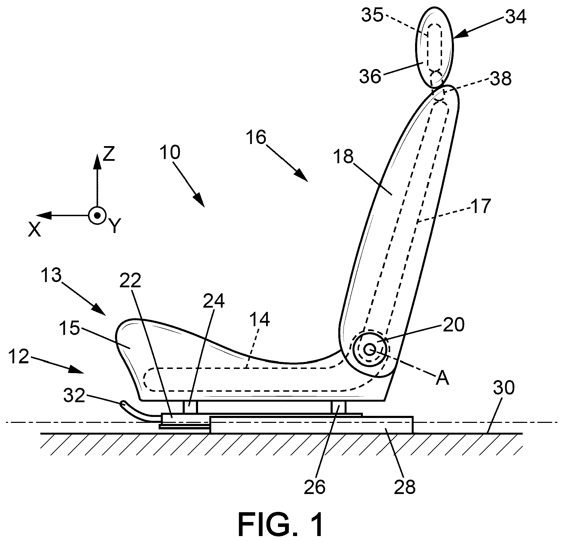

La figure 1 représente de façon schématique un siège de véhicule automobile **10** monté sur un mécanisme à glissières **12.**

Le siège **10** comporte une assise **13,** avec une armature d'assise **14** et une garniture d'assise **15,** sur laquelle un dossier **16,** avec une armature dossier **17** et une garniture de dossier **18,** est monté. L'armature de dossier **17** est ici pivotante autour d'un axe **A,** par rapport à l'armature d'assise **14.** Pour ce faire, un mécanisme d'articulation **20** est disposé entre l'armature d'assise **14** et l'armature de dossier **17. L'axe A** est par exemple sensiblement parallèle à la direction transversale **Y.**

L'assise **13** est montée sur des profilés mobiles **22,** également appelés coulisses ou profilés mâles, par l'intermédiaire de pieds **24, 26.** Chaque profilé mobile **22** fait partie d'une glissière **12** et est associé à un profilé fixe **28.** Le profilé fixe **28** est également appelé rail ou profilé femelle. Le profilé fixe **28** est fixé au plancher **30** d'un véhicule automobile.

Le siège **10** comprend dans cet exemple un élément de commande manuelle **32,** appelé palonnier, de commande en coulissement des glissières **12.** Cet élément de commande manuelle **32** permet notamment de bloquer et débloquer des systèmes d'arrêt du coulissement des profilés mobiles **22** par rapport au profilés fixes **28** respectifs. Une fois les systèmes d'arrêt débloqués, l'élément de commande manuelle **32** peut également être utilisé pour faire coulisser les profilés mobiles **22** par rapport à leurs profilés fixes **28** respectifs de la glissière **12** dans la direction longitudinale **X** des glissières **12.** Les profilés fixes **28** et mobiles **22** des glissières **12** peuvent être métalliques.

Alternativement, le déplacement des profilés mobiles **22** par rapport aux profilés fixes **28** est commandé au moyen d'un actionneur. Un ou plusieurs boutons de commande de l'actionneur peu/ven/t alors être prévu/s sur le siège **10,** notamment sur l'assise **13.**

Le siège **10** comporte encore un appui-tête **34.** L'appui-tête **34** comprend une armature d'appui-tête **35** et une garniture d'appui-tête **36.** L'armature d'appui-tête **35** est reliée à l'armature de dossier **17** au moyen d'au moins une tige de fixation d'appui-tête **38,** de préférence de deux tiges de fixation d'appui-tête **38.** La ou les tiges de fixation d'appui-tête **38** peu/ven/t être de longueur variable pour permettre un réglage en hauteur de la position de l'appui-tête **34.** Alternativement ou au surplus, l'armature d'appui-tête **35** est mobile par rapport à la ou aux tiges de fixation d'appui-tête **35** pour permettre ce réglage en hauteur de la position de l'appui-tête **34.** La garniture d'appui-tête **36** et/ou la garniture de dossier **18** peux/peuvent recouvrir en tout ou partie la ou les tiges de fixation d'appui-tête **38,** par exemple pour améliorer l'esthétique du siège de véhicule **10.**

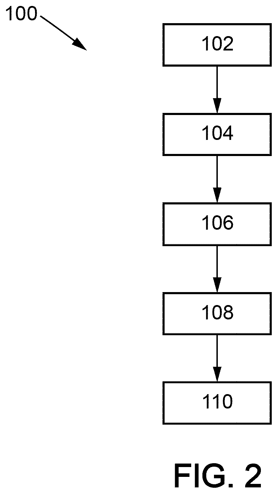

Dans la suite, on décrit plus en détail le dossier **16** du siège de véhicule **10** et son procédé de fabrication **100** illustré à la figure 2.

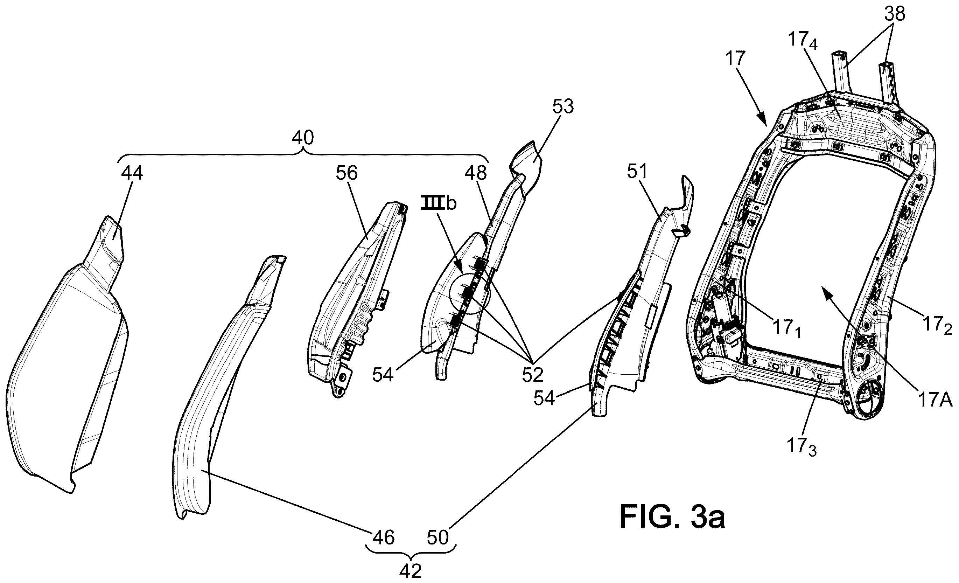

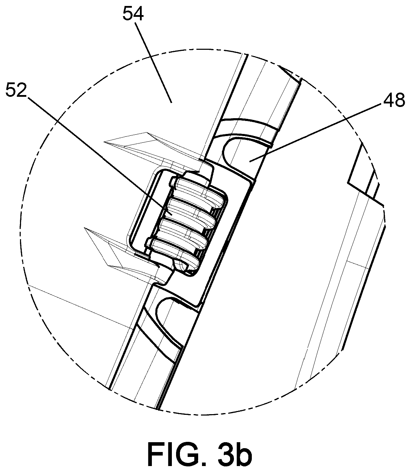

Comme illustré à la figure 2, le procédé **100** comprend une première étape **102** consistant à fournir une armature de dossier **17.** Comme illustré à la figure 3a, l'armature de dossier **17** comprend essentiellement un premier montant **17₁**, un deuxième montant **17₂,** une première traverse **17₃,** ci-après dite « traverse basse **17₃**», et une deuxième traverse **17₄**, ci-après dite « traverse haute **17₄** ». Les montants **17₁**, **17₂** et les traverses **17₃, 17₄** forment une armature de dossier **17** en forme de cadre. Pour ce faire, les montants **17₁**, **17₂,** et les traverses **17₃, 17₄** peuvent être fixées ensemble, notamment soudés ensemble. Alternativement, l'armature de dossier **17** est monobloc, celle-ci étant par exemple moulée.

Ici, les tiges de fixation d'appui-tête **38** sont déjà fixées sur la traverse haute **17₄** de l'armature de dossier **17** à cette première étape **102.** Alternativement, cependant, ces tiges de fixation d'appui-tête **38** peuvent être fixées sur la traverse haute **17₄** de l'armature de dossier **17** à une étape ultérieure.

Au cours d'une deuxième étape **104** du procédé de fabrication **100,** on fixe sur la face avant **17A** de l'armature de dossier **17,** visible sur la figure 3a, un premier module latéral de garniture **40** et un deuxième module latéral de garniture **42** sur un montant **17₁**, **17₂** respectif de l'armature de dossier **17.** Ainsi, un module latéral de garniture **40, 42** est disposé de chaque côté de l'armature de dossier **17.** La face avant **17A** de l'armature de dossier **17** est la face de l'armature de dossier **17** destinée à être orientée vers un occupant du siège de véhicule **10.** La face arrière **17B** de l'armature de dossier **17** est la face opposée à la face avant **17A.**

Chaque module latéral de garniture **40, 42** comprend ici une matelassure sous forme d'un bloc de mousse **44, 46,** chaque bloc de mousse **44, 46** étant fixé sur un support **48, 50** respectif. Par exemple, chaque bloc de mousse **44, 46** est surmoulé sur le support **48, 50** respectif. Chaque support **48, 50** peut être fixé au montant **17₁**, **17₂** respectif de l'armature de dossier **17,** par emboîtage élastique et/ou soudage et/ou vissage et/ou rivetage et/ou insertion en force d'un relief dans un relief complémentaire, notamment. Ici, chaque support **48, 50** comprend un montant **51, 53** respectif avec des reliefs **52** d'emboîtage élastique permettant de fixer, ici par emboîtage élastique, sur le montant **51, 53,** un support de coussin gonflable **54** sur lequel on fixe un coussin gonflable. Chaque coussin gonflable est relié à une pompe pour être gonflé. Les coussins gonflables améliorent ainsi le support latéral de l'occupant du siège de véhicule **10.** Dans l'exemple illustré, chaque relief **52** d'emboîtage élastique prend la forme d'un crochet en « U », dans lequel on emboîte élastiquement une tige formée par le support de coussin gonflable **54.** D'autres formes des reliefs d'emboîtage élastique **52** sont accessibles à l'Homme de l'art.

Le premier module latéral de garniture **40** destiné à être disposé le plus au centre du véhicule automobile équipé du siège **10,** comporte en outre ici un dispositif **56** de coussin gonflable de sécurité (ou airbag) latéral. Un tel dispositif de coussin gonflable de sécurité **56** vise à éviter les chocs directs tête contre tête des occupants de deux sièges disposés transversalement, l'un à côté de l'autre. Le dispositif de coussin gonflable de sécurité **56** est au moins en partie recouvert par le bloc de mousse **44** du premier module latéral de garniture **40.**

Le procédé de fabrication **100** se poursuit alors par une étape **106** de fixation d'une coque centrale arrière **58** sur l'armature de dossier **17.** La coque centrale arrière **58** permet d'obtenir un dos du siège **10** très esthétique. La coque centrale arrière peut être dépourvue de mousse, puisqu'elle n'est pas destinée à servir d'appui pour un occupant du siège de véhicule **10.**

Ici, de manière remarquable, un rebord supérieur **58₁** de la coque centrale arrière **58** présente deux trous **60** adaptés à recevoir chacun l'une des tiges de fixation d'appui-tête **38** respective. Ainsi, il est possible de mettre en place la coque centrale arrière **58** sur l'armature de dossier **17,** en guidant cette mise en place par la réception des tiges de fixation d'appui-tête **38** dans les ouvertures **60.** La mise en place de la coque centrale arrière **58** s'en trouve grandement facilitée. Une telle mise en place peut ainsi être réalisée au moyen d'un automate de manière efficace. La fixation de la coque centrale arrière **58** est alors réalisée, dans l'exemple illustré, par emboîtage élastique de deuxièmes reliefs d'emboîtage élastique **62** des supports **48, 50** des modules latéraux de garniture **40, 42,** avec des reliefs complémentaires **64** de la coque centrale arrière **58.** Ici, les deuxièmes reliefs d'emboîtage élastique **62** prennent la forme de tétons déformables présentant un bourrelet extrémal, reçus chacun dans une ouverture **64** respective dans la coque centrale arrière **58,** de diamètre inférieur au diamètre du bourrelet extrémal des tétons. Là encore, cette fixation, réalisée en déplaçant la coque centrale arrière **58** par rapport à l'armature de dossier **17,** peut être réalisée au moyen d'un ou plusieurs automates.

La fixation de la coque centrale arrière **58** peut cependant être réalisée de manière alternative ou complémentaire, à l'aide de tout moyen de fixation accessible à l'Homme de l'art, notamment par vissage, soudage, rivetage ou insertion en force d'un relief de fixation dans un relief complémentaire. De tels moyens de fixation peuvent également être mis en œuvre au moyen d'un ou plusieurs automates.

Également, dans l'exemple décrit, la coque centrale arrière **58** est fixée sur les modules latéraux de garniture **40, 42.** Alternativement ou de manière complémentaire, la coque centrale arrière **58** est fixée directement sur l'armature de dossier **17,** notamment sur les montants **17₁, 17₂** et/ou sur la traverse basse **17₃**.

Il peut être noté ici que la coque centrale arrière **58** présente des ouvertures **66,** distinctes des trous **60,** laissant libre l'accès à des troisièmes reliefs d'emboîtage élastique **68** des modules latéraux de garniture **40, 42,** notamment des supports **48, 50** des modules latéraux de garniture **40, 42.**

Le procédé de fabrication **100** se poursuit alors par une étape **108** de fixation de coques latérales arrière **70, 72,** ici de manière à recouvrir au moins une partie des extrémités latérales de la coque centrale arrière **58.** Pour ce faire, chaque coque latérale arrière **70, 72** comporte des moyens de fixation **74,** ici sous la forme de reliefs d'emboîtage élastique complémentaires des troisièmes reliefs d'emboîtage élastique **68** des supports **48, 50** des modules latéraux de garniture **40, 42.** En outre, chaque coque latérale arrière **70, 74** peut comporter un relief **76** destiné à être reçu dans un logement complémentaire **78** du module latéral de garniture **40, 42** correspondant, pour faciliter la mise en place et la fixation des coques latérales arrière **70, 72.**

Là encore, les coques latérales arrière **70, 72** ont essentiellement une fonction esthétique, notamment en ce qu'elles dissimulent les moyens de fixation de la coque centrale arrière **58.** Comme ces coques latérales arrière **70, 72** ne sont pas destinées à servir d'appui pour un occupant du siège de véhicule, elles peuvent également être dépourvues de matelassure, notamment de mousse.

Le procédé de fabrication **100** se poursuit alors par une dernière étape **110** de fixation d'un module central avant de garniture **80.**

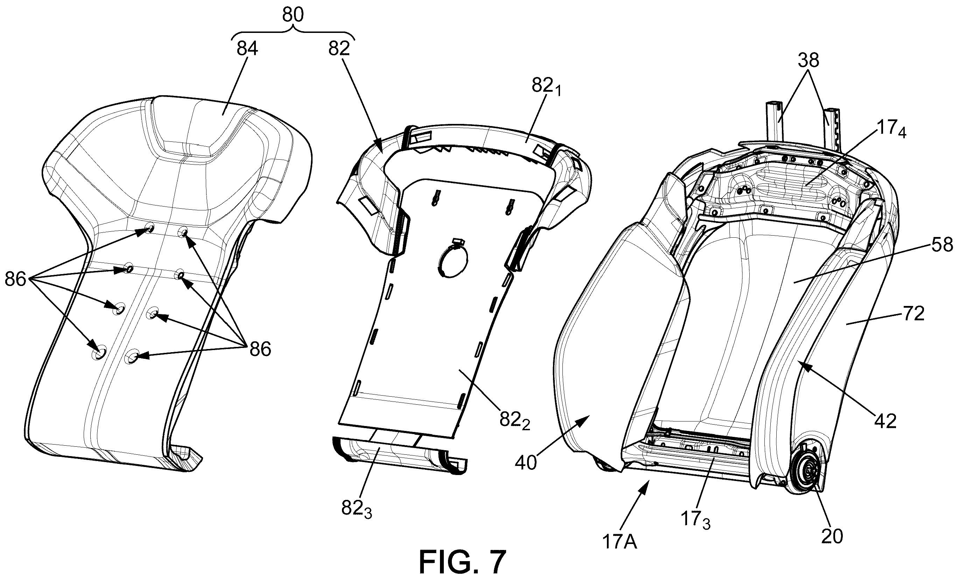

Comme illustré à la figure 7, le module central avant de garniture **80** comprend essentiellement un support **82** et une matelassure, ici sous la forme d'un bloc de mousse **84,** fixée sur le support **82.** Le bloc de mousse **84** peut notamment être surmoulé sur le support **82.**

Le support **82** du module central avant de garniture **80** peut comporter au moins trois pièces assemblées ensemble formant une partie haute **82₁,** une partie médiane **82₂** et une partie basse **82₃** du support **82.**

La partie haute **82₁** peut être conformée pour faciliter la mise en place du module central de garniture **80** sur l'armature de dossier **17.** Pour ce faire, la partie haute **82₁** et le bloc de mousse **84** peuvent présenter des ouvertures (non visibles sur les figures) adaptées à recevoir la ou les tiges de fixation d'appui-tête **38.** Ainsi, cette partie haute **82₁** vient se placer au-dessus de la coque centrale arrière **58,** au voisinage des tiges de fixation d'appui-tête **38.** Le module central de garniture **80** recouvre ainsi au moins partiellement, de préférence totalement, le rebord **58₁** de la coque centrale arrière **58.** Pour ce faire, l'extrémité supérieure du module central avant de garniture **80** peut être courbé.

La partie médiane **82₂** a essentiellement pour fonction de supporter le bloc de mousse **84,** là où l'occupant du siège de véhicule **10** vient principalement en appui sur le dossier de siège **16.** La partie médiane **82₂** présente ainsi avantageusement une résistance mécanique suffisante pour que le bloc de mousse **84** ne s'enfonce pas complètement lorsqu'un occupant du siège de véhicule **10** s'appuie sur le dossier de siège **16.** Cependant, la partie médiane **82₂** est avantageusement encore relativement souple pour assurer le confort de l'occupant du siège de véhicule **10.**

En outre, la partie médiane **82₂** peut supporter un ou plusieurs organes permettant de remplir une ou plusieurs fonctions de confort et/ou de sécurité pour l'occupant du siège **10.** Par exemple, un ventilateur peut être fixé sur cette partie médiane, adapté à souffler de l'air en direction de l'occupant du siège, à travers des ouvertures **86** dans le module central de garniture **80.**

La partie médiane **82₂** peut prendre différentes formes. Ici, la partie médiane **82₂** est réalisée sous forme d'une plaque souple, notamment plus souple que la partie supérieure **82₁** et/ou la partie inférieure **82₃**. Alternativement, la partie médiane **82₂** est constituée de fils ressorts s'étendant entre la partie haute **82₁** et la partie basse **82₃**, pour assurer le maintien en position du bloc de mousse **84,** avec un support élastique de ce bloc de mousse **84.**

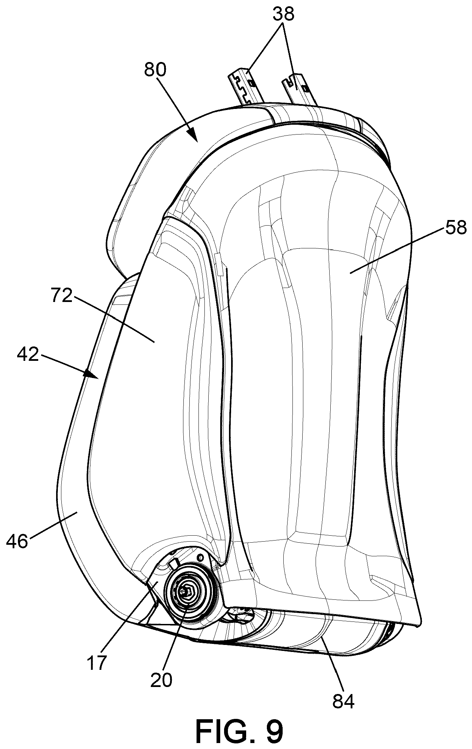

Enfin, la partie basse **82₃** est ici conformée pour assurer la fixation du module central avant de garniture **80,** en l'espèce sur l'armature de dossier **17.** Ici, cette partie basse **82₃** est courbée à son extrémité inférieure et présente des reliefs d'emboîtage élastique (non illustré sur les figures) adaptés à coopérer avec des reliefs complémentaires sur la traverse basse **17₃** de l'armature de dossier **17.** Comme cela est notamment visible sur la figure 9, une fois le module central avant de garniture **80** fixé sur l'armature de dossier **17,** le bloc de mousse **84** s'étend localement sous la coque centrale arrière **58.** En d'autres termes, une partie du bloc de mousse **84** du module central de garniture **80** s'étend entre l'armature de dossier **17,** notamment la traverse basse **17₃,** et la coque centrale arrière **58.** On obtient ainsi une finition très esthétique de la garniture de dossier **18.** Notamment les moyens de fixation de l'ensemble des éléments formant la garniture de dossier **18** sont dissimulés.

Cependant, d'autres moyens de fixation du module central de garniture **80** sur l'armature de dossier **17** peuvent être envisagés, comme notamment un vissage, un soudage, un rivetage ou une insertion en force d'un relief de fixation dans un relief complémentaire. Alternativement ou de manière complémentaire, le module central de garniture **80** peut être fixé à la coque centrale arrière **58** et/ou aux modules latéraux de garniture **40, 42** voire aux coques latérales arrière **70, 72.**

**II** est à noter que les éléments formant la garniture de dossier **18** peuvent être fixés successivement, notamment au moyen d'automates. À ce titre, la réalisation de la garniture au moyen de modules de garniture et de coque uniquement, permet une manipulation aisée, notamment par des automates.

Un appui-tête **34** peut finalement être fixé sur les tiges de fixation d'appui-tête **38.** Avantageusement, la garniture d'appui-tête **36** recouvre la ou les tiges de fixation d'appui-tête **38,** de sorte que l'ensemble du dossier **18** et de l'appui-tête **34** ainsi obtenu est particulièrement esthétique.

La présente invention ne se limite pas aux seuls exemples décrits ci-dessus. L'invention est au contraire susceptible de nombreuses variantes accessibles à l'Homme de l'art.

Ainsi, dans l'exemple illustré, la partie avant de la garniture de dossier **18** est réalisée au moyen de modules **40, 42, 80.** Comme indiqué précédemment, une telle réalisation au moyen de modules **40, 42, 80** permet d'automatiser facilement la fabrication du dossier **16** tout en obtenant un aspect très esthétique du dossier **16.** Alternativement cependant, la garniture de dossier **18,** notamment sa partie avant destinée à être en contact avec un occupant du siège de véhicule **10** peut être réalisée sous une autre forme, notamment sous une forme unitaire, sans modules distincts.

Également, chaque module de garniture **40, 42, 80** peut comprendre une housse recouvrant en tout ou partie le bloc de mousse **44, 46, 84** respectif. La housse peut notamment être disposée dans le moule servant au surmoulage du bloc de mousse **44, 46, 84** sur le support **48, 50, 82** respectif. La housse adhère alors au bloc de mousse **44, 46, 84.** Alternativement, la housse peut être fixée sur le bloc de mousse **44, 46, 84** et/ou sur le support **48, 50, 82** après la formation du bloc de mousse **44, 46, 84.** En d'autres termes, la housse peut être rapportée sur le bloc de mousse **44, 46, 84** et/ou sur le support **48, 50, 82.** La fixation de la housse est alors réalisée par tout moyen accessible à l'Homme de l'art.

Selon une autre variante encore, une housse unique est mise en œuvre pour recouvrir les trois blocs de mousse **44, 46, 84** des modules de garniture **40, 42, 80.** Là encore, dans ce cas, la housse est avantageusement rapportée sur les blocs de mousse **44, 46, 84** et/ou sur les supports **48, 50, 82** respectifs des modules de garniture **40, 42, 80,** voire sur l'armature de dossier **17** et/ou la coque centrale arrière **58.** Là encore, la fixation de la housse est réalisée par tout moyen accessible à l'Homme de l'art.

Avantageusement, chaque module de garniture **40, 42, 80** est garni indépendamment des deux autres, comme décrit précédemment. Alternativement cependant, il est envisageable qu'un bloc de mousse, par exemple, soit commun à plusieurs modules de garniture, notamment à tous les modules de garnitures **40, 42, 80.**

Il peut être noté qu'ici les modules latéraux de garniture **40, 42** préexistent à leur fixation sur l'armature de dossier **17.** Ainsi, ces modules latéraux de garniture **40, 42** ne sont pas réalisés par surmoulage de l'armature de dossier **17** et/ou d'éléments de structure déjà solidaires de l'armature de dossier **17.** Ceci n'empêche pas que les blocs de mousse **44, 46, 84** des différents modules de garniture **40, 42, 80** peuvent être réalisés par surmoulage d'un éventuel support du module de garniture **48, 50, 82** respectif. Cependant, ce surmoulage est réalisé préalablement à la fixation du support en question sur l'armature de dossier **17.**

## Revendications

1. Dossier (16) de siège de véhicule (10) comprenant une armature de dossier (17), au moins une tige de fixation d'appui-tête (38), et une garniture de dossier (18), la garniture de dossier (18) comprenant au moins une coque centrale arrière (58), fixée sur une face arrière (17B) de l'armature de dossier (17), la coque centrale arrière (58) comprenant au moins un trou (60) traversé par la au moins une tige de fixation d'appui-tête (38).

2. Dossier de siège de véhicule selon la revendication 1, dans lequel le au moins un trou (60) est formé sur un rebord (58₁) supérieur de la coque centrale arrière (58).

3. Dossier de siège de véhicule selon la revendication 1 ou 2, dans lequel la coque centrale arrière (58) comprend un trou (60), de préférence deux trous (60), chaque trou (60) étant traversé par une unique tige de fixation d'appui-tête (38) respective.

4. Dossier de siège de véhicule selon l'une des revendications 1 à 3, dans lequel la garniture de dossier (18) comprend au moins deux coques latérales arrière (70, 72), les coques latérales arrière (70, 72) étant de préférence fixées sur la coque centrale arrière (58), notamment par emboîtage élastique.

5. Dossier de siège de véhicule selon l'une des revendications 1 à 4, dans lequel la garniture de dossier (18) comprend également un module central avant de garniture (80), comprenant au moins une matelassure de dossier (84), le module central avant de garniture (80) étant fixé sur une face avant (17A) de l'armature de dossier (17).

6. Dossier de siège de véhicule selon la revendication 5, dans lequel le module central avant de garniture (80) comprend au moins un trou traversé par la au moins une tige de fixation d'appui-tête (38), le module central avant de garniture (80) recouvrant de préférence partiellement la coque centrale arrière (58) au voisinage de la au moins une tige de fixation d'appui-tête (80).

7. Dossier de siège de véhicule selon la revendication 5 ou 6, dans lequel l'armature de dossier (17) comprend au moins une traverse haute (17₄), solidaire de la au moins une tige de fixation d'appui-tête (38), et une traverse basse (17₃), le module central avant de garniture (80) comprenant des moyens de fixation à la traverse haute (17₄) et/ou à la traverse basse (17₃), notamment des moyens de fixation par emboîtage élastique.

8. Dossier de siège de véhicule selon l'une des revendications 5 à 7, dans lequel le module central avant de garniture (80) comprend un support (82) de la matelassure (84), la matelassure (84) étant par exemple surmoulée sur le support (82).

9. Dossier de siège de véhicule selon l'une quelconque des revendications précédentes, dans lequel la garniture de dossier (18) comprend au moins deux modules latéraux avant de garniture (40, 42), les au moins deux modules latéraux avant de garniture (40, 42) comprenant chacun un support (48, 50) fixé sur l'armature de dossier (17) et une matelassure (44, 46) fixée sur le support (48, 50) respectif, la coque centrale arrière (58) étant de préférence fixée sur les supports (48, 50) des modules latéraux avant de garniture (40, 42), notamment par emboîtage élastique.

10. Dossier de siège de véhicule selon les revendications 4 et 9, dans lequel les coques latérales arrière (70, 72) sont en outre fixées sur les supports (48, 50) des modules latéraux avant de garniture (40, 42), notamment par emboîtage élastique.

11. Ensemble de dossier de siège de véhicule comprenant un dossier (16) selon l'une quelconque des revendications précédentes et un appui-tête (34), l'appui-tête (34) comprenant une armature d'appui-tête (35) et une garniture d'appui-tête (36), l'armature d'appui-tête (35) étant fixée à la au moins une tige de fixation d'appui-tête (38).

12. Siège de véhicule automobile comprenant une assise (13) avec une armature d'assise (14) et un dossier (16) selon l'une quelconque des revendications 1 à 10, en particulier dans un ensemble de dossier de siège selon la revendication 11, l'armature de dossier (17) étant fixée à l'armature d'assise (14), de préférence de manière à pouvoir pivoter autour d'un axe transversal (A).

13. Procédé de fabrication d'un dossier de siège (16) selon l'une quelconque des revendications 1 à 10, comprenant les étapes consistant à :
i) fournir une armature de dossier (17) sur laquelle est fixée au moins une tige de fixation d'appui-tête (38) ;
ii) fournir une coque centrale arrière (58) comprenant au moins un trou (60) adapté à recevoir la au moins une tige de fixation d'appui-tête (38) ;
iii) mettre en place la coque centrale arrière (58) sur l'armature de dossier (17) de telle sorte que la au moins une tige de fixation d'appui-tête (38) soit reçue dans le au moins un trou (60) ; et
iv) fixer la coque centrale arrière (58), notamment par emboîtage élastique,
le procédé de fabrication d'un dossier de siège (16) comprenant de préférence en outre une étape a) consistant à fournir deux modules latéraux de garniture (40, 42) et à fixer les modules latéraux de garniture sur l'armature de dossier (17), l'étape a) étant de préférence encore avant l'étape iii), la coque centrale arrière (58) étant, de manière encore plus préférée, fixée sur les modules latéraux de garniture (40, 42).

14. Procédé de fabrication d'un dossier de siège (16) selon la revendication 13, comprenant une étape b) consistant à fournir deux coques latérales arrière (70, 72) et à fixer les coques latérales arrière (70, 72), l'étape b) étant de préférence postérieure à l'étape iv) et à l'étape a), le cas échéant, les coques latérales arrière (70, 72) étant de préférence encore fixées sur les modules latéraux de garniture (40, 42), le cas échéant.

15. Procédé de fabrication d'un dossier de siège (16) de véhicule selon la revendication 13 ou 14, comprenant une étape c) consistant à fournir un module central avant de garniture (80) et à fixer le module central avant de garniture (80) sur l'armature de dossier (17), de préférence par emboîtage élastique, l'étape c) étant de préférence encore postérieure aux étapes iv), a) et/ou b), le cas échéant.

## Patentansprüche

1. Rückenlehne (16) für einen Fahrzeugsitz (10), die einen Rückenlehnenrahmen (17), mindestens eine Kopfstützen-Befestigungsstange (38) und eine Rückenlehnenverkleidung (18) umfasst, wobei die Rückenlehnenverkleidung (18) mindestens eine hintere Mittelschale (58) umfasst, die an einer Rückseite (17B) des Rückenlehnenrahmens (17) befestigt ist, und die hintere Mittelschale (58) mindestens ein Loch (60) umfasst, durch das die mindestens eine Kopfstützen-Befestigungsstange (38) verläuft.

2. Rückenlehne für einen Fahrzeugsitz nach Anspruch 1, wobei das mindestens eine Loch (60) an einem oberen Rand (58₁) der hinteren Mittelschale (58) ausgebildet ist.

3. Rückenlehne für einen Fahrzeugsitz nach Anspruch 1 oder 2, wobei die hintere Mittelschale (58) ein Loch (60), vorzugsweise zwei Löcher (60), umfasst, wobei durch jedes Loch (60) jeweils eine einzelne Kopfstützen-Befestigungsstange (38) hindurchgeführt ist.

4. Rückenlehne für einen Fahrzeugsitz nach einem der Ansprüche 1 bis 3, wobei die Rückenlehnenverkleidung (18) mindestens zwei hintere Seitenschalen (70, 72) umfasst, wobei die hinteren Seitenschalen (70, 72) vorzugsweise an der hinteren Mittelschale (58) befestigt sind, insbesondere durch elastischen Formschluss.

5. Rückenlehne für einen Fahrzeugsitz nach einem der Ansprüche 1 bis 4, wobei die Rückenlehnenverkleidung (18) ferner ein vorderes mittleres Verkleidungsmodul (80) umfasst, das mindestens ein Rückenlehnenpolster (84) umfasst, wobei das vordere mittlere Verkleidungsmodul (80) an einer Vorderseite (17A) des Rückenlehnenrahmens (17) befestigt ist.

6. Rückenlehne für einen Fahrzeugsitz nach Anspruch 5, wobei das vordere mittlere Verkleidungsmodul (80) mindestens ein Loch umfasst, durch das die mindestens eine Kopfstützen-Befestigungsstange (38) verläuft, wobei das vordere mittlere Verkleidungsmodul (80) vorzugsweise die hintere Mittelschale (58) in der Nähe der mindestens einen Kopfstützen-Befestigungsstange (80) teilweise abdeckt.

7. Rückenlehne für einen Fahrzeugsitz nach Anspruch 5 oder 6, wobei der Rückenlehnenrahmen (17) mindestens einen oberen Querträger (17₄), der an der mindestens einen Kopfstützen-Befestigungsstange (38) befestigt ist, und einen unteren Querträger (17₃) umfasst, wobei das vordere mittlere Verkleidungsmodul (80) Befestigungsmittel zur Befestigung am oberen Querträger (17₄) und/oder am unteren Querträger (17₃) umfasst, insbesondere elastische formschlüssige Befestigungsmittel.

8. Rückenlehne für einen Fahrzeugsitz nach einem der Ansprüche 5 bis 7, wobei das vordere mittlere Verkleidungsmodul (80) einen Träger (82) für die Polsterung (84) aufweist, wobei die Polsterung (84) beispielsweise auf den Träger (82) aufgespritzt ist.

9. Rückenlehne für einen Fahrzeugsitz nach einem der vorstehenden Ansprüche, wobei die Rückenlehnenverkleidung (18) mindestens zwei vordere Seitenverkleidungsmodule (40, 42) umfasst, wobei die mindestens zwei vorderen Seitenverkleidungsmodule (40, 42) jeweils einen am Rückenlehnenrahmen (17) befestigten Träger (48, 50) und eine am jeweiligen Träger (48, 50) befestigte Polsterung (44, 46) umfassen, wobei die hintere Mittelschale (58) vorzugsweise an den Trägern (48, 50) der vorderen Seitenverkleidungsmodule (40, 42) befestigt ist, insbesondere durch elastischen Formschluss.

10. Rückenlehne für einen Fahrzeugsitz nach den Ansprüchen 4 und 9, wobei die hinteren Seitenschalen (70, 72) ferner an den Trägern (48, 50) der vorderen Seitenverkleidungsmodule (40, 42) befestigt sind, insbesondere durch elastischen Formschluss.

11. Rückenlehnenanordnung für einen Fahrzeugsitz, umfassend eine Rückenlehne (16) nach einem der vorstehenden Ansprüche und eine Kopfstütze (34), wobei die Kopfstütze (34) einen Kopfstützenrahmen (35) und eine Kopfstützenverkleidung (36) umfasst, wobei der Kopfstützenrahmen (35) an der mindestens einen Kopfstützen-Befestigungsstange (38) befestigt ist.

12. Kraftfahrzeugsitz, umfassend einen Sitzboden (13) mit einem Sitzbodenrahmen (14) und einer Rückenlehne (16) nach einem der Ansprüche 1 bis 10, insbesondere in einer Sitzrückenlehnenanordnung nach Anspruch 11, wobei der Rückenlehnenrahmen (17) am Sitzbodenrahmen (14), vorzugsweise derart, dass er um eine Querachse (A) schwenkbar ist, befestigt ist.

13. Verfahren zum Herstellen einer Sitzrückenlehne (16) nach einem der Ansprüche 1 bis 10, umfassend die folgenden Schritte:
i) Bereitstellen eines Rückenlehnenrahmens (17), an dem mindestens eine Kopfstützen-Befestigungsstange (38) befestigt ist;
ii) Bereitstellen einer hinteren Mittelschale (58), umfassend mindestens ein Loch (60), das zur Aufnahme der mindestens einen Kopfstützen-Befestigungsstange (38) geeignet ist;
iii) Platzieren der hinteren Mittelschale (58) auf dem Rückenlehnenrahmen (17), so dass die mindestens eine Kopfstützen-Befestigungsstange (38) in dem mindestens einen Loch (60) aufgenommen wird; und
iv) Befestigen der hinteren Mittelschale (58), insbesondere durch elastischen Formschluss,
wobei das Verfahren zum Herstellen einer Sitzrückenlehne (16) vorzugsweise ferner einen Schritt a) umfasst, der darin besteht, zwei Seitenverkleidungsmodule (40, 42) bereitzustellen und die Seitenverkleidungsmodule an dem Rückenlehnenrahmen (17) zu befestigen, wobei Schritt a) vorzugsweise noch vor Schritt iii) liegt, wobei noch bevorzugter die hintere Mittelschale (58) an den Seitenverkleidungsmodulen (40, 42) befestigt wird.

14. Verfahren zum Herstellen einer Sitzrückenlehne (16) nach Anspruch 13, umfassend einen Schritt b), der aus der Bereitstellung von zwei hinteren Seitenschalen (70, 72) und der Befestigung der hinteren Seitenschalen (70, 72) besteht, wobei Schritt b) vorzugsweise im Anschluss an Schritt iv) und gegebenenfalls Schritt a) erfolgt und die hinteren Seitenschalen (70, 72) vorzugsweise noch an den Seitenverkleidungsmodulen (40, 42), sofern vorhanden, befestigt sind.

15. Verfahren zum Herstellen einer Fahrzeugsitzrückenlehne (16) nach Anspruch 13 oder 14, umfassend einen Schritt c), der aus dem Bereitstellen eines vorderen mittleren Verkleidungsmoduls (80) und dem Befestigen des vorderen mittleren Verkleidungsmoduls (80) an dem Rückenlehnenrahmen (17), vorzugsweise durch elastischen Formschluss, besteht, wobei Schritt c) gegebenenfalls vorzugsweise noch im Anschluss an die Schritte iv), a) und/oder b) erfolgt.

## Claims

1. A backrest (16) for a vehicle seat (10) comprising a backrest frame (17), at least one headrest attachment rod (38), and a backrest trim (18), the backrest trim (18) comprising at least one rear central shell (58), attached to a rear face (17B) of the backrest frame (17), the rear central shell (58) comprising at least one hole (60) passed through by the at least one headrest attachment rod (38).

2. The backrest for a vehicle seat according to claim 1, wherein the at least one hole (60) is formed on an upper rim (58₁) of the rear central shell (58).

3. The backrest for a vehicle seat according to claim 1 or 2, wherein the rear central shell (58) comprises a hole (60), preferably two holes (60), each hole (60) being passed through by a single respective headrest attachment rod (38).

4. The backrest for a vehicle seat according to one of claims 1 to 3, wherein the backrest trim (18) comprises at least two rear side shells (70, 72), the rear side shells (70, 72) preferably being attached to the rear central shell (58), in particular by elastic interlocking.

5. The backrest for a vehicle seat according to one of claims 1 to 4, wherein the backrest trim (18) also comprises a front central trim module (80), comprising at least one backrest padding (84), the front central trim module (80) being attached to a front face (17A) of the backrest frame (17).

6. The backrest for a vehicle seat according to claim 5, wherein the front central trim module (80) comprises at least one hole passed through by the at least one headrest attachment rod (38), the front central trim module (80) preferably partially covering the rear central shell (58) in the vicinity of the at least one headrest attachment rod (80).

7. The backrest for a vehicle seat according to claim 5 or 6, wherein the backrest frame (17) comprises at least one upper crossmember (17₄), secured to the at least one headrest attachment rod (38), and a lower crossmember (17₃), the front central trim module (80) comprising attachment means for attachment to the upper crossmember (17₄) and/or to the lower crossmember (17₃), in particular elastic interlocking attachment means.

8. The backrest for a vehicle seat according to one of claims 5 to 7, wherein the front central trim module (80) comprises a support (82) for the padding (84), the padding (84) being overmolded onto the support (82), for example.

9. The backrest for a vehicle seat according to any one of the preceding claims, wherein the backrest trim (18) comprises at least two front side trim modules (40, 42), the at least two front side trim modules (40, 42) each comprising a support (48, 50) attached to the backrest frame (17) and a padding (44, 46) attached to the respective support (48, 50), the rear central shell (58) preferably being attached to the supports (48, 50) of the front side trim modules (40, 42), in particular by elastic interlocking.

10. The backrest for a vehicle seat according to claims 4 and 9, wherein the rear side shells (70, 72) are further attached to the supports (48, 50) of the front side trim modules (40, 42), in particular by elastic interlocking.

11. A backrest assembly for a vehicle seat comprising a backrest (16) according to any one of the preceding claims and a headrest (34), the headrest (34) comprising a headrest frame (35) and a headrest trim (36), the headrest frame (35) being attached to the at least one headrest attachment rod (38).

12. A motor vehicle seat comprising a seat bottom (13) with a seat bottom frame (14) and a backrest (16) according to any one of claims 1 to 10, in particular in a seat backrest assembly according to claim 11, the backrest frame (17) being attached to the seat bottom frame (14), preferably so as to be pivotable about a transverse axis (A).

13. A method of manufacturing a seat backrest (16) according to any one of claims 1 to 10, comprising the steps of:
i) providing a backrest frame (17) to which at least one headrest attachment rod (38) is attached;
ii) providing a rear central shell (58) comprising at least one hole (60) suitable for receiving the at least one headrest attachment rod (38);
iii) placing the rear central shell (58) on the backrest frame (17) so that the at least one headrest attachment rod (38) is received in the at least one hole (60); and
iv) attaching the rear central shell (58), in particular by elastic interlocking,
the method of manufacturing a seat backrest (16) preferably further comprising a step a) consisting in providing two side trim modules (40, 42) and attaching the side trim modules to the backrest frame (17), step a) preferably still being prior to step iii), the rear central shell (58) even more preferably being attached to the side trim modules (40, 42).

14. The method of manufacturing a seat backrest (16) according to claim 13, comprising a step b) consisting in providing two rear side shells (70, 72) and attaching the rear side shells (70, 72), step b) preferably being subsequent to step iv) and step a), as appropriate, the rear side shells (70, 72) preferably still being attached to the side trim modules (40, 42), if any.

15. The method of manufacturing a vehicle seat backrest (16) according to claim 13 or 14, comprising a step c) consisting in providing a front central trim module (80) and attaching the front central trim module (80) to the backrest frame (17), preferably by elastic interlocking, step c) preferably still being subsequent to steps iv), a) and/or b), as appropriate.
